# EUROPÄISCHE PATENTSCHRIFT

(11) **EP 2 535 181 B1**
(45) Veröffentlichungstag und Bekanntmachung des Hinweises auf die Patenterteilung: **26.02.2014**
(21) Anmeldenummer: 12171439.8
(22) Anmeldetag: 11.06.2012
(51) Int. Cl.: B32B 15/04, F16D 69/00

(54) **Reibbelagträgerplatte mit einer Korrosionsschutzschicht**
Friction lining holder board with an anti-corrosion coating
Plaque de support de garniture de friction avec une couche anti-corrosion

(30) Priorität: 17.06.2011 DE 102011051122
(43) Veröffentlichungstag der Anmeldung: 19.12.2012
(73) Patentinhaber: TMD Friction Services GmbH, 51381 Leverkusen (DE)
(72) Erfinder: Hogenkamp, Wolfgang, 42349 Wuppertal (DE); Wappler, Dieter, 51519 Odenthal (DE); Welp, Dirk, 45145 Essen (DE)
(74) Vertreter: Müller, Eckhard

(56) Entgegenhaltungen:
- EP-A1- 0 016 682
- EP-A1- 0 836 030
- DE-A1- 2 832 464

## Beschreibung

Die Erfindung betrifft eine Reibbelagträgerplatte nach dem Oberbegriff des Anspruchs 1 und ein Verfahren nach dem Oberbegriff des Anspruchs 9.

Aus dem Stand der Technik ist bereits eine Vielzahl von unterschiedlich ausgebildeten Kraftfahrzeugbremsen, insbesondere Bremssattelbremsen, bekannt, die Bremsbeläge aufweisen. Bremsbeläge weisen eine Reibbelagträgerplatte und einen Reibbelag auf, der durch Verpressen über eine Klebeverbindung mit der Reibbelagträgerplatte verbunden ist. Bei einer Bremsung werden die Bremsbeläge beispielsweise durch ein Hydrauliksystem an eine Bremsscheibe gepresst und die auf den Bremsbelag wirkenden Kräfte werden über die Reibbelagträgerplatte beispielsweise in einen Bremssattel eingeleitet. Zum Ermöglichen einer Bremsung ist es erforderlich, dass die Reibbelagträgerplatte beweglich in dem Bremssattel geführt wird. Dabei besteht zwischen der Reibbelagträgerplatte und dem Bremssattel ein geringes Spiel im Bereich 1/10 mm.

Die Verweilzeit von Bremsbelägen in Kraftfahrzeugen beträgt meistens mehrere Jahre. In diesem Zeitraum ist die Bremse bzw. der Bremsbelag Feuchtigkeit, Salzen, Straßenschmutz, wechselnden Temperaturen und mechanischen Bewegungen ausgesetzt, die zu einer Beschädigung des Reibbelagträgers durch beispielsweise Verrosten führen können. Um die Reibbelagträgerplatte vor einem Verrosten zu schützen, ist bekannt, die Reibbelagträgerplatte mit einer Korrosionsschutzschicht zu versehen.

Die hohen Kräfte, die beim Bremsen auf die Reibbelagträgerplatte wirken, können dazu führen, dass die Korrosionsschutzschicht, insbesondere im Bereich der Außenrandkanten der Reibbelagträgerplatte, beschädigt wird. Eine Beschädigung der Korrosionsschutzschicht, insbesondere im Bereich der Außenrandkanten der Reibbelagträgerplatte, kann auch bei einem unvorsichtigen Einbau des Bremsbelags in die Bremse auftreten, bei der die Außenrandkanten beispielsweise gegen ein anderes Bauteil stoßen. Ferner kann eine Beschädigung der Korrosionsschutzschicht bei der Produktion erfolgen, da die Führungsflächen des Reibbelagträgers als Fixierpunkte in der Produktion verwendet werden, wobei bei einer ungünstigen Fixierung die Führungsflächen bzw. die Außenrandkanten der Führungsflächen und damit die Korrosionsschutzschicht beschädigt werden können. Bei einer Beschädigung der Korrosionsschutzschicht kann ein Verrosten der Reibbelagträgerplatte erfolgen.

Infolge des Verrostens kann es zu einem derartigen Aufquellen der Reibbelagträgerplatte kommen, dass das Spiel zwischen der Reibbelagträgerplatte und dem Bremssattel aufgezehrt wird. Dadurch kann die notwendige Rückstellung des Bremsbelags nach einem Bremsvorgang nicht mehr gewährleistet werden bzw. die Verschiebekräfte erhöhen sich. Dies führt zu einem Restmoment, das an der Bremse anliegt, da der Reibbelag an der Bremsscheibe schleift. Im Ergebnis bewirkt eine ungenügende Rückstellung des Bremsbelags, einen erhöhten Kraftstoffverbrauch, einen erhöhten Verschleiß des Reibbelags und der Bremsscheibe und Schleifgeräusche.

Es ist bekannt, die Reibbelagträgerplatten neben der Korrosionsschutzschicht zusätzlich galvanisch gegen Korrosion zu schützen, wobei das galvanische Auftragen vor dem Herstellungsprozess des Bremsbelags erfolgt. Das Auftragen kann die Reibbelagträgerplatte optisch so stark schädigen, dass eine Endlackierung notwendig ist. Ferner wird die Haftfähigkeit von Reibbelagklebern auf galvanisch behandelten Reibbelagträgern stark verringert, so dass vor der Kleberbeschichtung eine Nachbehandlung der Reibbelagträgerplatten notwendig ist. Sowohl die Endlackierung als auch die Nachbehandlung der Reibbelagträgerplatten erhöhen die Herstellungskosten des Bremsbelags.

Die Aufgabe der Erfindung besteht darin, eine Reibbelagträgerplatte vorzusehen, die wenigstens die zuvor genannten Nachteile nicht aufweist.

Die Aufgabe der Erfindung wird durch den Gegenstand des Anspruchs 1 und das Verfahren gemäß Anspruch 9 gelöst. Vorteilhafte Ausgestaltungen der Erfindung sind Gegenstand der Unteransprüche.

Erfindungsgemäß ist eine Reibbelagträgerplatte vorgesehen, die mit einer Korrosionsschutzschicht versehen ist. Dabei ist wenigstens eine Außenrandkante der Reibbelagträgerplatte verrundet und/oder abgefast, um eine Beschädigung der Korrosionsschutzschicht in diesem Bereich zu vermeiden. Insbesondere weist die Reibbelagträgerplatte einen Trägerplattenführungsabschnitt mit einer Trägerplattenführungsfläche auf, wobei die Trägerplattenführungsfläche wenigstens eine abgerundete und/oder abgefaste Außenrandkante aufweist. Durch das Abrunden und/oder Abfasen einer Außenrandkante der Trägerplattenführungsfläche verringert sich die Gefahr einer Beschädigung der Korrosionsschutzschicht, so dass die Gefahr eines Verrostens der Reibbelagträgerplatte verringert wird.

Die Gefahr einer Beschädigung der Korrosionsschutzschicht verringert sich, weil durch das Vorsehen einer Abrundung und/oder Fase die Kontaktfläche zwischen der Außenrandkante der Trägerplattenführungsfläche und dem Führungselement, wie beispielsweise dem Bremssattel, vergrößert wird. Dadurch wirkt auf die Außenrandkante ein kleinerer Druck als bei einem Vorsehen einer aus dem Stand der Technik bekannten spitzförmig ausgebildeten Außenrandkante der Trägerplattenführungsfläche, was die Gefahr einer Beschädigung der Korrosionsschutzschicht verringert. Durch das Vorsehen einer abgerundeten und/oder abgefasten Außenrandkante, verringert sich auch die Gefahr einer Beschädigung der Korrosionsschutzschicht bei dem Einbau und der Produktion der Reibbelagträgerplatte.

Da durch ein Abfasen und/oder Abrunden der Außenrandkanten eine Beschädigung der Korrosionsschutzschicht verringert werden kann, reduzieren sich die Herstellungskosten für die Reibbelagträgerplatte, da diese nicht mehr galvanisch behandelt werden muss. Ein weiterer Vorteil des Abrundens und/oder Abfasens der Außenrandkanten besteht darin, dass ein Schutz gegen eine Beschädigung der Korrosionsschutzschicht an denjenigen Stellen der Reibbelagträgerplatte erfolgt, an denen mit einer Beschädigung der Korrosionsschutzsicht zu rechnen ist. D.h. es nicht mehr notwendig, die gesamte Reibbelagträgerplatte zu bearbeiten, wie es bei der galvanischen Behandlung erfolgt. Das Abfasen und/oder Abrunden kann im Fertigungsverlauf des Bremsbelags dann erfolgen, wenn die nachfolgenden Produktionsschritte keine Schädigung mehr hervorrufen.

Als Trägerplattenführungsabschnitt wird der Abschnitt der Reibbelagträgerplatte verstanden, über welchen die beim Bremsen entstehenden Kräfte auf das Führungselement der Bremse, insbesondere den Bremssattel, übertragen werden. Die Reibbelagträgerplatte kann wenigstens zwei Trägerplattenführungsabschnitte aufweisen, die an sich gegenüberliegenden Enden der Reibbelagträgerplatte vorgesehen sein können. Der Trägerplattenführungsabschnitt kann die Trägerplattenführungsfläche und eine Trägerplattenauflagefläche aufweisen. Im zusammengebauten Zustand der Bremse liegt die Reibbelagträgerplatte über die Trägerplattenauflagefläche auf dem Führungselement auf. Zwischen der Trägerplattenführungsfläche und dem Führungselement bildet sich das oben genannte Spiel aus, das vorhanden sein muss, um eine Bewegung der Reibbelagträgerplatte in dem Führungselement sicherzustellen.

In einer bevorzugten Ausführung kann die Trägerplattenführungsfläche senkrecht zu einem reibbelagseitigen Reibbelagträgerplattenabschnitt und einem betätigungsmittelseitigen Reibbelagträgerplattenabschnitt stehen. Ferner kann die Trägerplattenführungsfläche senkrecht zu der Trägerplattenauflagefläche stehen. Dabei kann wenigstens eine der Außenrandkanten der Trägerplattenführungsfläche, die zwischen der Trägerplattenführungsfläche und dem reibbelagseitigen Reibbelagträgerplattenabschnitt und/oder zwischen der Trägerplattenführungsfläche und dem betätigungsmittelseitigen Reibbelagträgerplattenabschnitt verläuft, abgerundet und/oder abgefast sein.

Da ein Großteil der beim Bremsen erzeugten Kräfte über die Trägerplattenführungsfläche, die zur Trägerplattenauflagefläche senkrecht steht, auf das Führungselement übertragen wird, wird durch das Abrunden und/oder Abfasen von wenigstens einer der beiden zuvor genannten Außenrandkanten der Trägerplattenführungsfläche die Gefahr einer Beschädigung der Korrosionsschutzschicht signifikant reduziert.

Im Sinne der Erfindung werden als Außenrandkanten die den Außenumfang der Reibbelagplattenträgerplatte definierenden Kanten verstanden. Als Außenrandkanten der Trägerplattenführungsfläche werden die die Trägerplattenführungsfläche definierenden Kanten verstanden. Als reibbelagseitiger Reibbelagträgerplattenabschnitt wird im Sinne der Erfindung die Seite der Reibbelagträgerplatte verstanden, die zu einer Bremsscheibe weist und auf der der Reibbelag angebracht ist. Bei dem betätigungsmittelseitigen Reibbelagträgerplattenabschnitt handelt es sich um die zu dem reibbelagseitigen Reibbelagträgerplattenabschnitt gegenüberliegende Seite, auf die beim Bremsen ein Betätigungsmittel eine Kraft zum Verschieben der Reibbelagträgerplatte ausübt.

Die Gefahr einer Beschädigung der Korrosionsschutzschicht kann zusätzlich reduziert werden, indem wenigstens eine Außenrandkante, die zwischen dem reibbelagseitigen Reibbelagträgerplattenabschnitt und dem betätigungsmittelseitigen Reibbelagträgerplattenabschnitt verläuft, abgerundet und/oder abgefast wird. Durch eine abgerundete und/oder abgewinkelte Ausführung wenigstens einer der beiden Außenrandkante im Bereich zwischen 30° bis 90°, insbesondere 45°, werden sowohl die Kerbwirkung hin zum Bremssattel und/oder eine Hebelwirkung des Trägerplattenführungsabschnitts in die Reibbelagträgerplatte hinein verringert.

In einer vorteilhaften Ausgestaltung der Erfindung kann wenigstens eine der Außenrandkanten der Trägerplattenauflagefläche abgerundet und/oder abgefast werden. Dadurch wird die Gefahr einer Korrosionsschutzschicht zusätzlich reduziert. Die Trägerplattenauflagefläche und/oder Trägerplattenführungsfläche können unterschiedlich ausgebildete Außenrandkanten aufweisen. So können die Außenrandkanten unterschiedlich ausgebildete Abrundungen und/oder Fasen aufweisen. Insbesondere kann eine Außenrandkante der Trägerplattenführungsfläche abgerundet und eine andere Außenrandkante der Trägerplattenführungsfläche abgefast sein. Der Radius einer Abrundung kann in einem Bereich zwischen 0,2mm bis 1 mm liegen. Die Fase kann einen Winkel zwischen 10° bis 60° besitzen.

Das Abfasen und/oder Abrunden der oben genannten Außenrandkanten erfolgt vor einem Aufbringen der Korrosionsschutzschicht. Insbesondere erfolgt das Abrunden und/oder Abfasen der Außenrandkante der Trägerplattenführungsfläche, die zwischen der Trägerplattenführungsfläche und dem reibbelagseitigen Reibbelagträgerplattenabschnitt vorgesehen ist, und / oder der Außenrandkante der Trägerplattenführungsfläche, die zwischen der Trägerplattenführungsfläche und dem betätigungsmittelseitigen Reibbelagträgerplattenabschnitt vorgesehen ist, vor einem Aufbringen der Korrosionsschutzschicht.

Die Abrundung und/oder Fase kann während eines Stanzens der Reibbelagträgerplatte, die beispielsweise 7mm dick ist, und/oder vor einem Reinigen der Reibbelagträgerplatte erzeugt werden. Die Korrosionsschutzschicht kann auf die Abrundung und/oder Fase aufgebracht sein.

Die Reibbelagträgerplatte und/oder Abrundung und/oder Fase kann vor dem Auftragen der Korrosionsschutzschicht mittels wenigstens eines Lasers zumindest teilsweise gereinigt werden. Durch die Verwendung eines Lasers kann eine hochreine Reibbelagträgerplatte erreicht werden, so dass das Verkleben der Korrosionsschutzschicht mit der Reibbelagträgerplatte verbessert wird. Ein weiterer Vorteil der Verwendung des Lasers besteht darin, dass bei der Bearbeitung der Reibbelagträgerplatte keine chemischen Abfallprodukte wie bei der Galvanisierung entstehen. Außerdem ist der benötigte Platzbedarf für die Lasertechnik gering und das Abrunden und/oder Abfasen kann durch den Bremsbelaghersteller selbst durchgeführt werden. Im Ergebnis reduzieren sich die Kosten für den Bremsbelag.

Bei dem Laser kann es sich um einen gütegeschalteten Diodenlaser im Impulsbetrieb handeln. Die zu reinigende Reibbelagträgerplattenfläche kann mit 20 bis 150 W/cm², insbesondere 50 W/cm² beaufschlagt werden. Durch eine derartige Beaufschlagung der zu reinigenden Reibbelagträgerplattenfläche wird sichergestellt, dass sich die Reibbelagträgerplatte nicht stark erwärmt und/oder in ihren Abmessungen und/oder im Gefüge verändert. Nichtsdestotrotz wird durch die obige Beaufschlagung sichergestellt, dass innerhalb einer wenige µm (Mikrometer) dünnen Wirkschicht Temperaturen von bis zu 1000°C auftreten. Infolge dieser hohen Temperaturen verdampfen Oxidschichten und/oder Schmutz, die als sublimierter Staub abgesaugt werden können. Wegen der hohen Temperaturen, die auf die Schmutz-/Oxidpartikel einwirken, entstehen keine Schadstoffe, die eine komplexe Nachbehandlung erfordern. Es genügt, die Anlage an eine übliche Staubabsaugung anzuschließen.

Ein weiterer Vorteil der Verwendung eines Lasers besteht darin, dass physikalisch bedingt eine Selbstregelung der Wirkdauer eintritt. Dies liegt daran, weil bei einer völlig sauberen Reibbelagträgerplatte bzw. Metalloberfläche eine Reflektion des Laserstrahls erfolgt, während hingegen bei einer verschmutzten Reibbelagträgerplatte der Laserstrahl nicht reflektiert wird, sondern ein Verdampfen der Schmutz-/Oxidpartikel bewirkt.

In einer vorteilhaften Ausgestaltung der Erfindung wird der Laserstrahl über wenigstens ein Umlenkelement zum Reinigen der Fase und/oder der Abrundung geführt. Bei dem Umlenkelement kann es sich um ein Reflexionselement, wie z.B. einen Spiegel, und/oder ein Prisma handeln. Durch das Vorsehen eines Umlenkelements kann auf einfache Weise eine Reinigung der Abrundung und/oder Fase erreicht werden, wenn ein einziger Laser verwendet wird. Natürlich kann das Umlenkelement auch als ein anderes Bauteil ausgebildet sein, solange es geeignet ist, den Laserstrahl umzulenken. Alternativ oder zusätzlich zu dem Vorsehen von einem Umlenkelement können mehrere Laser zum Reinigen der Fase und/oder der Abrundung verwendet werden.

Die Reibbelagträgerplatte kann in einer Sattelbremse eingesetzt werden. Natürlich kann die erfindungsgemäße Reibbelagträgerplatte auch in anderen Bremsen eingesetzt werden, bei denen eine Führung der Bewegung der Reibbelagträgerplatte in einem Führungselement erfolgt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen und deren Rückbeziehung.

Hierzu zeigen:
- Figur 1:: eine perspektivische Ansicht von erfindungsgemäßen Reibbelagträgerplatten gemäß einer ersten Ausführungsform mit einem Führungselement,
- Figur 2:: eine vergrößerte Darstellung des Bereichs A aus Figur 1,
- Figur 3:: eine Vorderansicht auf eine erfindungsgemäße Reibbelagträgerplatte gemäß einer zweiten Ausführungsform,
- Figur 4:: eine vergrößerte Darstellung einer Draufsicht auf den Bereich B aus Figur 3.

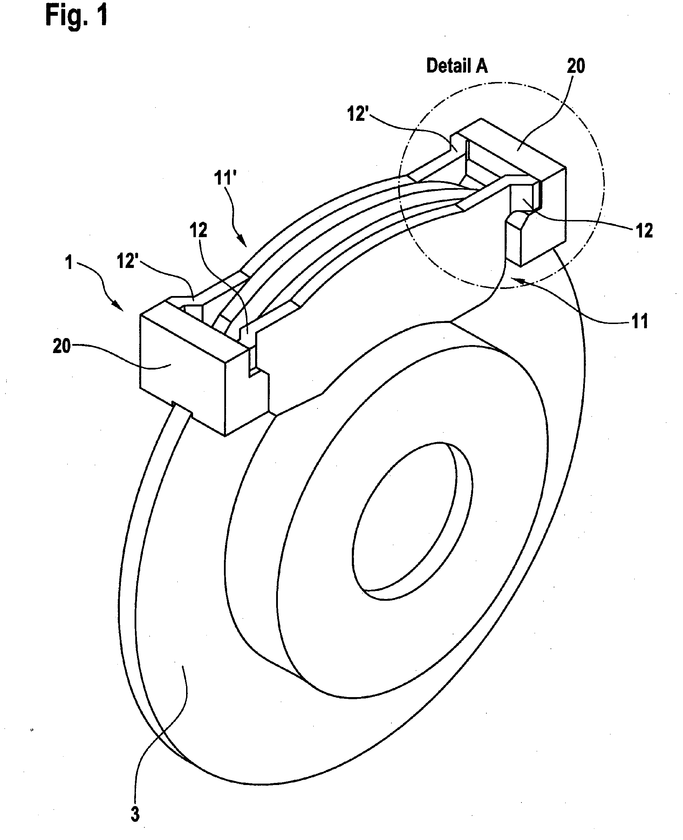

Die in Figur 1 gezeigten Reibbelagträgerplatten 11, 11 einer Bremse 1 sind gleich aufgebaut und werden in einem Führungselement 20 geführt. Ein Teil einer Bremsscheibe 3 ist zwischen den beiden Reibbelagträgerplatten 11, 11 vorgesehen. Die Reibbelagträgerplatten 11, 11' weisen an ihren zu dem Führungselement 20 weisenden Enden jeweils einen Trägerplattenführungsabschnitt 12, 12' auf. Die einzelnen Trägerplattenführungsabschnitte 12, 12' sind derart an den Reibbelagträgerplatten 11, 11' ausgebildet, dass sie sich in eine Richtung weg von der Bremsscheibe 3 erstrecken.

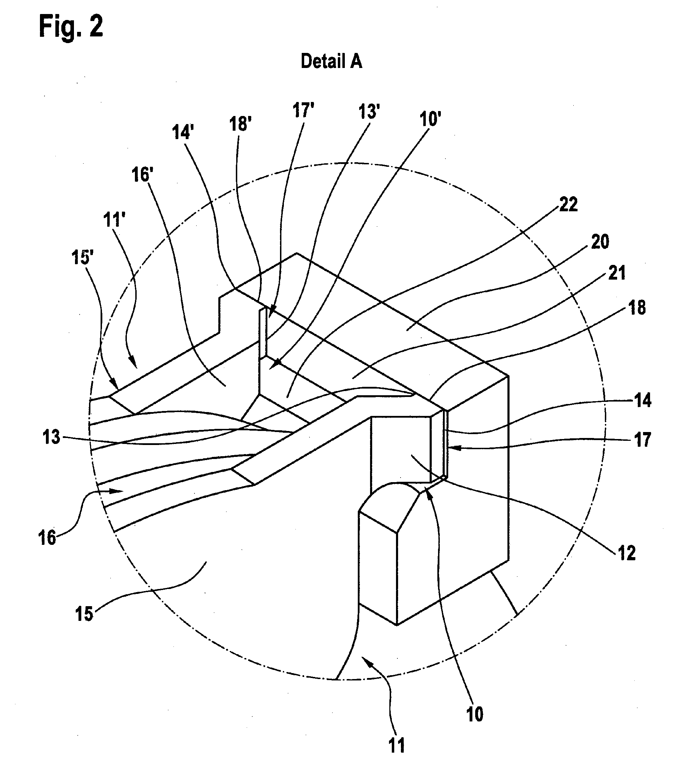

Figur 2 zeigt eine vergrößerte Darstellung des in Figur 1 gezeigten Bereichs A. Der Trägerplattenführungsabschnitt 12, 12' weist jeweils eine Trägerplattenauflagefläche 10, 10` und eine Trägerplattenführungsfläche 17, 17' auf. Das Führungselement 20 weist einen Führungselementauflageabschnitt 22 und einen Führungselementführungsabschnitt 21 auf. Der Führungselementauflageabschnitt 22 verläuft parallel zu der Trägerplattenauflagefläche 10, 10' und der Führungselementführungsabschnitt 21 verläuft parallel zu der Trägerplattenführungsfläche 17, 17'.

In der in Figur 2 gezeigten Anordnung der Reibbelagträgerplatte 11, 11' liegt der Trägerplattenführungsabschnitt 12, 12' auf dem Führungselement 20. Genauer gesagt liegt die Trägerplattenauflagefläche 10, 10' auf dem Führungselementauflageabschnitt 22. Zwischen der Trägerplattenführungsfläche 17, 17' und dem Führungselementführungsabschnitt 21 bildet sich ein kleiner Spalt im Bereich von 0,1mm aus.

Die Trägerplattenführungsfläche 17, 17' des jeweiligen Trägerplattenführungsabschnitts 12, 12' wird durch vier Außenrandkanten begrenzt. So bildet sich die erste Außenrandkante 13, 13' zwischen der zum Führungselementführungsabschnitt 21 weisenden Trägerplattenführungsfläche 17, 17' und dem reibbelagseitigen Reibbelagträgerplattenabschnitt 16, 16' aus. Die zweite Außenrandkante 14, 14' bildet sich zwischen der zum Führungselementführungsabschnitt 21 weisenden Trägerplattenführungsfläche 17, 17' und dem betätigungsmittelseitigen Reibbelagträgerplattenabschnitt 15, 15' aus. Die erste und zweite Außenrandkante 13, 14 erstrecken sich in eine Richtung weg von der Trägerplattenauflagefläche 10, 10' bzw. dem Führungselementauflageabschnitt 22.

Die dritte Außenrandkante 18, 18' verläuft jeweils zwischen dem reibbelagseitigen Reibbelagträgerplattenabschnitt 16, 16' und dem betätigungsmittelseitigen Reibbelagträgerplattenabschnitt 15, 15' einer Reibbelagträgerplatte 11, 11' und ist an dem von dem Führungselementauflageabschnitt 22 entfernten Ende der ersten und zweiten Außenrandkante 13, 13', 14, 14' mit diesen verbunden. Eine vierte Außenrandkante verläuft jeweils parallel zu der dritten Außenrandkante 18, 18' zwischen dem reibbelagseitigen Reibbelagträgerplattenabschnitt 16, 16' und dem betätigungsmittelseitigen Reibbelagträgerplattenabschnitt 15, 15' einer Reibbelagträgerplatte 11, 11 Die vierte Außenrandkante ist an dem dem Führungselementauflageabschnitt 22 nahen Ende der ersten und zweiten Außenrandkante 13, 13', 14, 14' mit diesen verbunden.

Die erste und zweite Außenrandkante 13, 13', 14, 14' sind abgerundet. Die dritte (18) und vierte Außenrandkante sind nicht bearbeitet und sind spitzförmig ausgebildet.

Figur 3 zeigt eine Reibbelagträgerplatte 11 gemäß einer zweiten Ausführungsform. Dabei bezeichnen die gleichen Bezugszeichen die gleichen Bauteile. Die Reibbelagträgerplatte 11 weist an ihren zu dem in Figur 3 nicht gezeigten Führungselement gerichteten Enden jeweils einen Trägerplattenführungsabschnitt 12 auf. Der Trägerplattenführungsabschnitt 12 weist analog zu dem in den Figuren 1 und 2 dargestellten Trägerplattenführungsabschnitt eine Trägerplattenführungsfläche 17 und eine Trägerplattenauflagefläche 10 auf.

Im Unterschied zu dem in den Figuren 1 und 2 gezeigten Trägerplattenführungsabschnitt sind in dem in Figur 3 gezeigten Trägerplattenführungsabschnitt 12 die dritte und vierte Außenrandkante 18, 19 abgefast. Dabei ist die dritte Außenrandkante 18 mit einem Winkel von 45° zu einer Trägerplattenoberseite, die parallel zur Trägerplattenauflagefläche 10 ist, und die vierte Außenrandkante mit einem Winkel von 30° zur Trägerplattenauflagefläche 10 abgefast.

Figur 4 zeigt eine Draufsicht auf den in Figur 3 mit B gekennzeichneten Bereich einer Reibbelagträgerplatte 11,11'. Wie aus Figur 4 zu entnehmen ist, sind die erste und zweite Außenrandkante 13, 14 der Trägerplattenführungsfläche 17 abgerundet.

### Bezugszeichenliste

- 1: Bremse
- 3: Bremsscheibe
- 10, 10': Trägerplattenauflagefläche
- 11, 11': Reibbelagträgerplatte
- 12, 12': Trägerplattenführungsabschnitt
- 13, 13': Außenrandkante zwischen Trägerplattenführungsfläche und reibbelagseitigen Reibbelagträgerplattenabschnitt
- 14, 14': Außenrandkante zwischen Trägerplattenführungsfläche und betätigungsmittelseitigen Reibbelagträgerplattenabschnitt
- 15, 15': betätigungsmittelseitiger Reibbelagträgerplattenabschnitt
- 16, 16': reibbelagseitiger Reibbelagträgerplattenabschnitt
- 17, 17': Trägerplattenführungsfläche
- 18, 18': Außenrandkante zwischen reibbelagseitigen Reibbelagträgerplattenabschnitt und betätigungsmittelseitigen Reibbelagträgerplattenabschnitt Außenrandkante zwischen reibbelagseitigen Reibbelagträgerplattenabschnitt und betätigungsmittelseitigen Reibbelagträgerplattenabschnitt
- 20: Führungselement
- 21: Führungselementführungsabschnitt
- 22: Führungselementauflageabschnitt

## Patentansprüche

1. Reibbelagträgerplatte (11) mit einer Korrosionsschutzschicht, insbesondere Lackschicht, **dadurch gekennzeichnet, dass** eine Außenrandkante der Reibbelagträgerplatte (11) abgerundet und/oder abgefast ist.

2. Reibbelagträgerplatte (11) nach Anspruch 1, **dadurch gekennzeichnet, dass** die Reibbelagträgerplatte (11) einen Trägerplattenführungsabschnitt (12) zum Führen der Reibbelagträgerplatte (11) in einem Führungselement (20) einer Bremse (1) aufweist, wobei eine Außenrandkante (13, 14, 18) einer Trägerplattenführungsfläche (17) des Trägerplattenführungsabschnitts (12) abgerundet und/oder abgefast ist.

3. Reibbelagträgerplatte (11) nach Anspruch 2, **dadurch gekennzeichnet, dass** die Trägerplattenführungsfläche (17) senkrecht zu einem reibbelagseitigen Reibbelagträgerplattenabschnitt (16) und einem betätigungsmittelseitigen Reibbelagträgerplattenabschnitt (15) ausgebildet ist, wobei die Außenrandkante (13) zwischen der Trägerplattenführungsfläche (17) und dem reibbelagseitigen Reibbelagträgerplattenabschnitt (16) und/oder die Außenrandkante (14) zwischen der Trägerplattenführungsfläche (17) und dem betätigungsmittelseitigen Reibbelagträgerplattenabschnitt (15) abgerundet und/oder abgefast sind.

4. Reibbelagträgerplatte (11) nach einem der Ansprüche 2 oder 3, **dadurch gekennzeichnet, dass** wenigstens eine Außenrandkante (18) zwischen dem reibbelagseitigen Reibbelagträgerplattenabschnitt (16) und dem betätigungsmittelseitigen Reibbelagträgerplattenabschnitt (15) der Trägerplattenführungsfläche (17) abgerundet und/oder abgefast ist.

5. Reibbelagträgerplatte (11) nach einem der vorhergehenden Ansprüche 2 bis 4, **dadurch gekennzeichnet, dass** die Trägerplattenführungsfläche (17) senkrecht zu einer Trägerplattenauflagefläche (10) ausgebildet ist.

6. Reibbelagträgerplatte (11) nach einem der vorhergehenden Ansprüche, **dadurch gekennzeichnet, dass** der Radius der Abrundung in einem Bereich zwischen 0,2mm bis 1 mm, insbesondere 0,5mm, liegt.

7. Reibbelagträgerplatte (11) nach einem der vorhergehenden Ansprüche, **dadurch gekennzeichnet, dass** die Korrosionsschutzschicht auf die Abrundung und/oder die Fase aufgebracht ist.

8. Bremse (1), insbesondere Sattelbremse, mit einer Reibbelagträgerplatte (11) nach einem der vorhergehenden Ansprüche.

9. Verfahren zum Aufbringen einer Korrosionsschutzschicht auf eine Reibbelagträgerplatte (11), **dadurch gekennzeichnet, dass** vor einem Aufbringen der Korrosionsschutzschicht auf die Reibbelagträgerplatte (11) wenigstens eine Außenrandkante, insbesondere die Außenrandkante (13, 14, 18, 19) von einer Trägerplattenführungsfläche (17), abgerundet und/oder abgefast wird.

10. Verfahren nach Anspruch 9, **dadurch gekennzeichnet, dass** die Trägerplattenführungsfläche (17) senkrecht zu einer Trägerplattenauflagefläche (10) ausgebildet wird, wobei die Außenrandkante (13) zwischen der Trägerplattenführungsfläche (17) und dem reibbelagseitigen Reibbelagträgerplattenabschnitt (16) und/oder die Außenrandkante (14) zwischen der Trägerplattenführungsfläche (17) und dem betätigungsmittelseitigen Reibbelagträgerplattenabschnitt (15) abgerundet und/oder abgefast werden.

11. Verfahren nach einem der vorhergehenden Ansprüche 9 oder 10, **dadurch gekennzeichnet, dass** die Abrundung und/oder Fase und/oder Reibbelagträgerplatte (11) nach einem Abrunden und/oder Abfasen der Außenrandkante (13, 14, 18) mittels wenigstens eines Lasers gereinigt wird.

12. Verfahren nach einem der vorhergehenden Ansprüche 9 bis 11, **dadurch gekennzeichnet, dass** wenigstens ein Laserstrahl über wenigstens ein Umlenkelement, insbesondere ein Reflexionselement, zum Reinigen der Fase und/oder Abrundung geführt wird.

13. Verfahren nach einem der vorhergehenden Ansprüche 9 bis 12, **dadurch gekennzeichnet, dass** die Abrundung und/oder Fase während eines Stanzens der Reibbelagträgerplatte (11) erzeugt wird.

## Claims

1. Friction lining holder board (11) with an anti-corrosion coating, in particular lacquer coating, **characterized in that** an outer marginal edge of the friction lining holder board (11) is rounded and/or chamfered.

2. Friction lining holder board (11) according to Claim 1, **characterized in that** the friction lining holder board (11) has a holder board guide portion (12) for guiding the friction lining holder board (11) in a guide element (20) of a brake (1), an outer marginal edge (13, 14, 18) of a holder board guide face (17) of the holder board guide portion (12) being rounded and/or chamfered.

3. Friction lining holder board (11) according to Claim 2, **characterized in that** the holder board guide face (17) is formed perpendicularly to a friction lining-side friction lining holder board portion (16) and to an actuation means-side friction lining holder board portion (15), the outer marginal edge (13) between the holder board guide face (17) and the friction lining-side friction lining holder board portion (16) and/or the outer marginal edge (14) between the holder board guide face (17) and the actuation means-side friction lining holder board portion (15) and is rounded and/or chamfered.

4. Friction lining holder board (11) according to either one of Claims 2 and 3, **characterized in that** at least one outer marginal edge (18) between the friction lining-side friction lining holder board portion (16) and the actuation means-side friction lining holder board portion (15) of the holder board guide face (17) is rounded and/or chamfered.

5. Friction lining holder board (11) according to one of the preceding Claims 2 to 4, **characterized in that** the holder board guide face (17) is formed perpendicularly to a holder board supporting face (10).

6. Friction lining holder board (11) according to one of the preceding claims, **characterized in that** the radius of the rounding lies in a range of between 0.2 mm and 1 mm, in particular 0.5 mm.

7. Friction lining holder board (11) according to one of the preceding claims, **characterized in that** the anti-corrosion coating is applied to the rounding and/or the chamfer.

8. Brake (1), in particular calliper brake, with a friction lining holder board (11) according to one of the preceding claims.

9. Method for applying an anti-corrosion coating to a friction lining holder board (11), **characterized in that**, before the anti-corrosion coating is applied to the friction lining holder board (11), at least one outer marginal edge, in particular the outer marginal edge (13, 14, 18, 19) of a holder board guide face (17), is rounded and/or chamfered.

10. Method according to Claim 9, **characterized in that** the holder board guide face (17) is formed perpendicularly to a holder board supporting face (10), the outer marginal edge (13) between the holder board guide face (17) and the friction lining-side friction lining holder board portion (16) and/or the outer marginal edge (14) between the holder board guide face (17) and the actuation means-side friction lining holder board portion (15) being rounded and/or chamfered.

11. Method according to either one of the preceding Claims 9 and 10, **characterized in that** the rounding and/or chamfer and/or friction lining holder board (11) are/is cleaned by means of at least one laser after rounding and/or chamfering of the outer marginal edge (13, 14, 18).

12. Method according to one of the preceding Claims 9 to 11, **characterized in that** at least one laser beam is guided via at least one deflection element, in particular reflection element, for cleaning the chamfer and/or rounding.

13. Method according to one of the preceding Claims 9 to 12, **characterized in that** the rounding and/or chamfer are/is generated during stamping of the friction lining holder board (11).

## Revendications

1. Plaque de support de garniture de friction (11) comprenant une couche anticorrosion, en particulier une couche de vernis, **caractérisée en ce qu'**une arête de bord extérieur de la plaque de support de garniture de friction (11) est arrondie et/ou biseautée.

2. Plaque de support de garniture de friction (11) selon la revendication 1, **caractérisée en ce que** la plaque de support de garniture de friction (11) présente une portion de guidage de plaque de support (12) pour guider la plaque de support de garniture de friction (11) dans un élément de guidage (20) d'un frein (1), une arête de bord extérieur (13, 14, 18) d'une surface de guidage de plaque de support (17) de la portion de guidage de plaque de support (12) étant arrondie et/ou biseautée.

3. Plaque de support de garniture de friction (11) selon la revendication 2, **caractérisée en ce que** la surface de guidage de plaque de support (17) est réalisée perpendiculairement à une portion de plaque de support de garniture de friction (16) du côté de la garniture de friction et à une portion de plaque de support de garniture de friction (15) du côté du moyen d'actionnement, l'arête de bord extérieur (13) entre la surface de guidage de plaque de support (17) et la portion de plaque de support de garniture de friction (16) du côté de la garniture de friction et/ou l'arête de bord extérieur (14) entre la surface de guidage de plaque de support (17) et la portion de plaque de support de garniture de friction (15) du côté du moyen d'actionnement étant arrondies et/ou biseautées.

4. Plaque de support de garniture de friction (11) selon l'une quelconque des revendications 2 ou 3, **caractérisée en ce qu'**au moins une arête de bord extérieur (18) entre la portion de plaque de support de garniture de friction (16) du côté de la garniture de friction et la portion de plaque de support de garniture de friction (15) du côté du moyen d'actionnement de la surface de guidage de plaque de support (17) est arrondie et/ou biseautée.

5. Plaque de support de garniture de friction (11) selon l'une quelconque des revendications 2 à 4, **caractérisée en ce que** la surface de guidage de plaque de support (17) est réalisée perpendiculairement à une surface d'appui de plaque de support (10).

6. Plaque de support de garniture de friction (11) selon l'une quelconque des revendications précédentes, **caractérisée en ce que** le rayon de l'arrondi est compris dans une plage de 0,2 mm à 1 mm, notamment de 0,5 mm.

7. Plaque de support de garniture de friction (11) selon l'une quelconque des revendications précédentes, **caractérisée en ce que** la couche anticorrosion est appliquée sur l'arrondi et/ou sur le biseau.

8. Frein (1), en particulier frein à étrier, comprenant une plaque de support de garniture de friction (11) selon l'une quelconque des revendications précédentes.

9. Procédé pour appliquer une couche anticorrosion sur une plaque de support de garniture de frein (11), **caractérisé en ce qu'**avant une application de la couche anticorrosion sur la plaque de support de garniture de friction (11), au moins une arête de bord extérieur, en particulier l'arête de bord extérieur (13, 14, 18, 19) d'une surface de guidage de plaque de support (17), est arrondie et/ou biseautée.

10. Procédé selon la revendication 9, **caractérisé en ce que** la surface de guidage de plaque de support (17) est réalisée perpendiculairement à une surface d' appui de plaque de support (10), l'arête de bord extérieur (13) entre la surface de guidage de plaque de support (17) et la portion de plaque de support de garniture de friction (16) du côté de la garniture de friction et/ou l'arête de bord extérieur (14) entre la surface de guidage de plaque de support (17) et la portion de plaque de support de garniture de friction (15) du côté du moyen d'actionnement étant arrondies et/ou biseautées.

11. Procédé selon l'une quelconque des revendications 9 ou 10, **caractérisé en ce que** l'arrondi et/ou le biseau et/ou la plaque de support de garniture de friction (11) sont nettoyés avec au moins un laser après un arrondissement et/ou un biseautage de l'arête de bord extérieur (13, 14, 18).

12. Procédé selon l'une quelconque des revendications 9 à 11, **caractérisé en ce qu'**au moins un faisceau laser est guidé sur au moins un élément de déflexion, en particulier un élément de réflexion, pour nettoyer le biseau et/ou l'arrondi.

13. Procédé selon l'une quelconque des revendications 9 à 12, **caractérisé en ce que** l'arrondi et/ou le biseau est produit pendant un estampage de la plaque de support de garniture de friction (11).
